# EUROPÄISCHE PATENTSCHRIFT

(11) **EP 4 390 878 B1**
(45) Veröffentlichungstag und Bekanntmachung des Hinweises auf die Patenterteilung: **27.05.2026**
(21) Anmeldenummer: 23209630.5
(22) Anmeldetag: 14.11.2023
(51) Int. Cl.: G06V 20/56, G06V 10/764

(54) **KARTOGRAFIEREN EINER BODENFLÄCHE**
CARTOGRAPHIC OF A FLOOR SURFACE
CARTOGRAPHIE DE SURFACE DE SOL

(30) Priorität: 21.12.2022 DE 102022214212
(43) Veröffentlichungstag der Anmeldung: 26.06.2024
(73) Patentinhaber: BSH Hausgeräte GmbH, 81739 München (DE)
(72) Erfinder: Schnitzer, Frank, 97616 Bad Neustadt (DE); Wittkowski, Josephine, 83278 Traunstein (DE)

(56) Entgegenhaltungen:
- US-A1- 2017 273 527
- US-A1- 2020 333 799
- US-A1- 2021 101 287

## Beschreibung

Die Erfindung betrifft das Kartografieren einer Bodenfläche. Insbesondere betrifft die Erfindung das Bestimmen von Grenzen eines auf der Bodenfläche liegenden Belags.

US 2017/273527 A1 (HAN SEONG JOO [KR] ET AL) 28. September 2017 (2017-09-28) offenbart einen Reinigungsroboter, der eine Karte der Umgebung erstellt.

Die Erfindung wird in den angehängten unabhängigen Ansprüchen definiert. Eine Bearbeitungsmaschine ist dazu eingerichtet, eine Bodenfläche in einem Haushalt zu befahren und zu bearbeiten. Die Bearbeitung umfasst dabei zum Beispiel das trockene und/oder das nasse Reinigen des Bodenbelags. Die Bearbeitungsmaschine kann beispielsweise einen Saugroboter, einen Wischroboter oder ein kombiniertes Gerät umfassen. Üblicherweise tastet die Bearbeitungsmaschine ihre Umgebung ab und legt eine Karte an, anhand der sie sich beispielsweise zwischen Möbeln und anderen Hindernissen orientieren kann. Ein Benutzer kann die Karte einsehen und editieren. Beispielsweise kann eine Zone angelegt werden, welche die Bearbeitungsmaschine nicht befahren oder nicht bearbeiten soll oder eine besonders intensiv zu reinigende Zone, etwa eine Laufstraße oder ein Bereich unter einem Esstisch kann angegeben werden.

Die Bearbeitungsmaschine kann unterschiedliche Beläge der Bodenfläche erkennen und entsprechend unterschiedlich behandeln. So kann ein langfloriger Teppich von einem kurzflorigen Teppichboden unterschieden werden. Der Teppichboden kann gesaugt und mit einer Borstenwalze gereinigt werden und der Teppich kann nur gesaugt werden, damit sich die Borstenwalze nicht im Teppichflor verfängt. Von Teppich zu unterscheiden ist auch Hartboden, welcher anders als ein Teppich zusätzlich zur Trockenreinigung auch nass gereinigt werden kann.

Das Erkennen eines Bodenbelags wie eines Teppichs ist häufig fehlerhaft, sodass ein Nutzen der Kartografierung beschränkt sein kann. Ein erkannter Teppich sieht für einen Benutzer auf der Karte nicht selten zerklüftet aus, mit ungeglätteten Kanten und "löchrigen" Arealen in der Mitte. Um zumindest gefüllte Flächen zu erzeugen, wird als Umgehung des Problems daher teilweise einfach eine besonders breite Spur zur Teppich-Markierung gezogen, was die Anzeige von Details in der Karte aber insgesamt auch unzuverlässiger macht. Der Benutzer kann erheblichen Aufwand haben, um aus der Abtastung der Bodenfläche hilfreiche Einstellungen zur Steuerung der Bearbeitungsmaschine zu erstellen.

Es wurde vorgeschlagen, Abtastungen der Bodenfläche mittels Methoden des maschinellen Lernens zu verarbeiten, um einen auf der Bodenfläche liegenden Teppich verbessert zu erkennen. Das Trainieren einer entsprechenden Vorrichtung ist jedoch sehr aufwändig und erfordert eine große Vielzahl qualitativ hochwertiger Trainingsdaten, die zunächst gesammelt und aufbereitet werden müssen.

Eine der vorliegenden Erfindung zu Grunde liegende Aufgabe besteht in der Angabe einer verbesserten Technik zum Kartografieren einer Bodenfläche in einem Haushalt. Die Erfindung löst diese Aufgabe mittels der Gegenstände der unabhängigen Ansprüche. Unteransprüche geben bevorzugte Ausführungsformen wieder.

Ein Verfahren zum Kartografieren einer Bodenfläche in einem Haushalt umfasst Schritte des Abtastens der Bodenfläche und des Bestimmens von Abschnitten der Bodenfläche, an denen eine vorbestimmte erste Beschaffenheit der Bodenfläche vorliegt; des Eintragens der bestimmten Abschnitte in eine Belegungskarte der Bodenfläche; des Anwendens eines binärmorphologischen Filters auf die Belegungskarte; und des Bestimmens von ersten Grenzen eines auf der Bodenfläche liegenden Belags auf der Basis der Belegungskarte.

Das Verfahren kann lokal im Haushalt ausgeführt werden und keine externen Ressourcen erfordern. Beispielsweise kann das Verfahren teilweise oder vollständig mittels einer Bearbeitungsmaschine durchgeführt werden. Durch Nutzung einer etablierten Technik der Bildverarbeitung können auch Abtastdaten, die zunächst mittel bis stark fehlerhaft sind, zu einer guten Näherung an die tatsächlichen Grenzen des Bodenbelags weiterverarbeitet werden. Dazu benötigte Operationen können auch mittels einer weniger leistungsfähigen Verarbeitungseinrichtung in akzeptabler Zeit ausgeführt werden. Das Verfahren ist deterministisch und erfordert keinen Einsatz schwer nachvollziehbarer Technik wie eines künstlichen neuronalen Netzwerks.

Der binärmorphologische Filter arbeitet auf einer Matrix, deren Zellen jeweils einen ersten oder einen zweiten vorbestimmten Wert tragen. Die Matrix ist gut geeignet, um für eine grafische Repräsentation der Bodenfläche verwendet zu werden. Einer der beiden möglichen Werte einer Zelle kann anzeigen, dass die vorbestimmte Beschaffenheit vorliegt und der andere Wert entsprechend, dass die Beschaffenheit nicht vorliegt. Die Beschaffenheit kann dem Teppich zugeordnet sein. Der Teppich kann grafisch auf der Matrix erkennbar sein und leicht mittels des binärmorphologischen Filters bearbeitet werden.

Die Matrix kann eine eigenständige Karte bilden oder als dedizierte Ebene in einer Umgebungskarte realisiert sein, die noch weitere Informationen über den Haushalt umfassen kann. Das Verfahren kann auch mehrfach angewendet werden, um Objekte mehrerer unterschiedlicher Beschaffenheiten zu bestimmen. Eine vorbestimmte Beschaffenheit kann einer Karte bzw. einer Kartenebene zugeordnet sein und hierin beschriebene Verarbeitungen können unabhängig bezüglich der verschiedenen Karten bzw. Ebenen ausgeführt werden.

Das Bestimmen von Beschaffenheiten der Bodenfläche kann kombiniert ausgeführt werden, sodass die Bodenfläche nur einmal abgefahren werden muss, um Informationen über mehrere verschiedene Objekte auf der Bodenfläche zu erhalten. Beispielsweise kann ein Wert, der in einem vorbestimmten Wertebereich liegt, für die Beschaffenheit bestimmt werden. Der Wertebereich kann in mehrere Abschnitte unterteilt sein, die den Karten bzw. Ebenen zugeordnet sind. Eine in einem Abschnitt bestimmte Beschaffenheit der Bodenfläche kann in derjenigen Karte bzw. Ebene markiert werden, die dem Abschnitt des Wertebereichs zugeordnet ist, in dem die bestimmte Beschaffenheit liegt. Ein binärmorphologische Filter kann dann in den einzelnen Karten bzw. Ebenen angewendet werden.

Die Filteroperation kann eine Dilatation (dilatation), gefolgt von einer Erosion (erosion) umfassen. Eine solche kombinierte Operation wird auch Schließung (closing) genannt. Die Dilatation kann eine Erweiterung der Grenzen des grafischen Objekts mittels einer vorbestimmten Maske umfassen. Die Erosion trägt umgekehrt mittels einer vorbestimmten Maske von Grenzen des Objekts einen vorbestimmten Rand ab. Eine Maske kann ein geometrisches Objekt wie ein Quadrat oder einen Kreis umfassen. Masken für die beiden Vorgänge können in Größe und Form einander entsprechen oder unterschiedlich gewählt sein. Es können auch mehrere Schließungen nacheinander durchgeführt werden, wobei gleiche oder unterschiedliche Masken angewandt werden können.

Die Schließung kann innere Ecken eines grafischen Objekts glätten, kleine Distanzen überbrücken und insbesondere innere Löcher schließen. Durch die Schließung können Fehler bei der Bestimmung des Bodenbelags verbessert korrigiert und eine geschlossene Repräsentation bereitgestellt werden.

Die Bodenfläche kann mittels einer Bearbeitungsmaschine mit einer antreibbaren Borstenwalze zur Reinigung der Bodenfläche abgetastet werden. Dabei kann die Beschaffenheit der Bodenfläche auf der Basis einer Stromaufnahme eines Antriebs der Borstenwalze bestimmt werden. So kann die Beschaffenheit in einem Bearbeitungsbereich der Borstenwalze bestimmt werden, sodass die Bodenfläche insgesamt schneller abgetastet werden kann. Alternativ kann auch eine Bearbeitungsmaschine zur Abtastung verwendet werden, die über einen dedizierten Sensor zur Erfassung der Beschaffenheit der Bodenfläche verfügt. Es ist bevorzugt, dass der Sensor keine punktuelle Bestimmung durchführt, sondern auf eine vorbestimmte Fläche bezogen ist, die sich im Bereich der Bearbeitungsmaschine befindet.

Die Borstenwalze weist eine vorbestimmte Breite auf, die quer zu einer Fahrtrichtung der Bearbeitungsmaschine bestimmt ist. Die Breite kann insbesondere entlang einer Drehachse der Borstenwalze bestimmt sein. Die Drehachse sich senkrecht zur Fahrtrichtung parallel zum Untergrund erstrecken. Eine Größe einer Filtermaske des binärmorphologischen Filters ist in Abhängigkeit der Breite der Borstenwalze gewählt. So kann der Filter Umstände der Abtastung reflektieren, sodass genauere oder realistischere Ergebnisse erzielt werden können.

Es ist außerdem bevorzugt, dass eine kreisförmige Filtermaske verwendet wird, deren Radius in einem Bereich von einer halben und zwei Breiten der Borstenwalze liegt. Besonders bevorzugt entspricht der Radius der Filtermaske der Breite der Borstenwalze. Versuche haben gezeigt, dass durch eine solche Kombination Grenzen des Bodenbelags sehr effizient und zutreffend bestimmt werden können.

In einer weiteren Ausführungsform können zweite Grenzen des Bodenbelags auf der Basis einer systematischen Abtastung seines Umrisses bestimmt werden. Die Grenzen können miteinander kombiniert werden, um Stärken beider Bestimmungen miteinander zu vereinen. Dazu können auf regelmäßig versetzten, zueinander antiparallelen Bahnen über die Bodenfläche jeweils Abschnitte bestimmt werden, an denen sich die Beschaffenheit der Bodenfläche ändert. Zweite Grenzen des Belags können auf der Basis einer Vielzahl solcher Abschnitte bestimmt werden. Die Grenzen können dann auf der Basis einer Schnittmenge von Objekten bestimmt werden, die durch die ersten und zweiten Grenzen bestimmt sind. Die Schnittmenge kann einer Repräsentation des Belags entsprechen und Grenzen der Schnittmenge können als Grenzen des Belags bereitgestellt werden.

Insbesondere wenn die Beschaffenheit mittels einer Borstenwalze bestimmt wird, die eine sich quer zur Bewegungsrichtung der Bearbeitungsmaschine erstreckende Abtastfläche umfasst, kann eine Bestimmung der zweiten Grenzen ungenau sein, wenn die Abtastfläche schräg über eine Kante des Belags fährt. In einer Ausführungsform kann ein Mittelpunkt zwischen einer rechten und einer linken Begrenzung der Borstenwalze als Abschnitt bestimmt werden, an dem sich die Beschaffenheit ändert.

Bevorzugt wird zwischen Abschnitten auf zwei antiparallelen Bahnen, an denen sich die Beschaffenheit gegensinnig ändert, ein Mittelpunkt bestimmt. Auf der Basis einer Vielzahl solcher Mittelpunkte können dann die zweiten Grenzen des Belags bestimmt werden. Dazu können jeweils benachbarte Mittelpunkte nach Art eines Polygons miteinander verbunden werden. Wird eine regelmäßig geformte Kante des Belags erkannt, beispielsweise wenn die Mittelpunkte im Wesentlichen auf einer Geraden oder auf einer konvexen Kurve einer vorbestimmten Krümmung liegen, so können in Randbereichen der Kurve liegende Abschnitte, an denen sich die Beschaffenheit ändert, zusätzlich berücksichtigt werden. Auf diese Weise können viele Teppiche mit üblichen Formen verbessert abgebildet werden. Beispielsweise kann ein rechteckiger, ein quadratischer, ein runder, ein ellipsenförmiger oder ein ovaler Teppich gut erkannt werden.

Es ist bevorzugt, dass eine Dilatation der ersten Grenzen erfolgt, bevor die Schnittmenge zwischen den durch die ersten und zweiten Grenzen bestimmten Objekten gebildet wird. Die Dilatation folgt bevorzugt auf eine Schließung und kann mit einer bereits verwendeten oder einer dedizierten Maske durchgeführt werden.

Die bestimmten Grenzen bzw. ein von den Grenzen umschlossenes Objekt auf der Belegungskarte können dazu verwendet werden, eine Bearbeitungsmaschine zur Reinigung der Bodenfläche zu steuern. So kann die Bearbeitungsmaschine dazu angesteuert werden, das Objekt nicht zu befahren. Je nach bestimmter Beschaffenheit kann das Objekt auch befahren, aber nur in einer vorbestimmten Weise oder gar nicht bearbeitet werden. Eine kombinierte Bodenbearbeitungsmaschine, die eine befahrene Bodenfläche sowohl saugen als auch wischen kann, kann beispielsweise dazu angesteuert werden, das bestimmte Objekt nur zu saugen, aber nicht feucht zu wischen.

Weiter bevorzugt wird eine grafische Repräsentation der Bodenfläche bereitgestellt, die einen Hinweis auf bestimmte Grenzen des Belags umfasst. Dazu kann die Belegungskarte als Rastergrafik betrachtet und dem Benutzer grafisch präsentiert werden. Der Benutzer kann kontrollieren, ob der bestimmte Bodenbelag korrekt und vollständig ist und die Informationen gegebenenfalls korrigieren oder ergänzen. Häufig wird keine Änderung der bestimmten Informationen nötig sein und der Benutzer kann deren Korrektheit bestätigen.

Eine Bearbeitungsmaschine für eine Bodenfläche umfasst ein Fahrwerk zum Fahren der Bearbeitungsmaschine über die Bodenfläche; eine Einrichtung zur Bestimmung, ob ein befahrener Abschnitt der Bodenfläche eine vorbestimmte Beschaffenheit aufweist; eine Speichervorrichtung für eine Belegungskarte der Bodenfläche; und eine Verarbeitungseinrichtung. Dabei ist die Verarbeitungseinrichtung dazu eingerichtet, bestimmte Abschnitte, an denen die vorbestimmte Beschaffenheit vorliegt, in die Belegungskarte einzutragen; einen binärmorphologischen Filters auf die Belegungskarte anzuwenden; und erste Grenzen eines auf der Bodenfläche liegenden Belags auf der Basis der Belegungskarte zu bestimmen.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Es ist zu beachten, dass verschiedene Bearbeitungsmaschinen für das Abtasten und das Bearbeiten der Bodenfläche verwendet werden können. Die Verarbeitung der abgetasteten Informationen auf die hierin vorgeschlagene Weise kann dabei von der ersten, der zweiten oder jeweils teilweise durch beide erfolgen.

Die Erfindung wird nun unter Bezug auf die beiliegenden Figuren genauer beschrieben, in denen:
- Figur 1: eine Bearbeitungsmaschine auf einer Bodenfläche;
- Figur 2: ein Ablaufdiagramm eines Verfahrens;
- Figur 3: unverarbeitete und verarbeitete Belegungskarten einer Bodenfläche;
- Figur 4: eine schematische Darstellung einer Abtastung einer Bodenfläche;
- Figur 5: einen bestimmten Umriss eines Bodenbelags; und
- Figur 6: einen Schnitt bestimmter Grenzen eines Bodenbelags
darstellt.

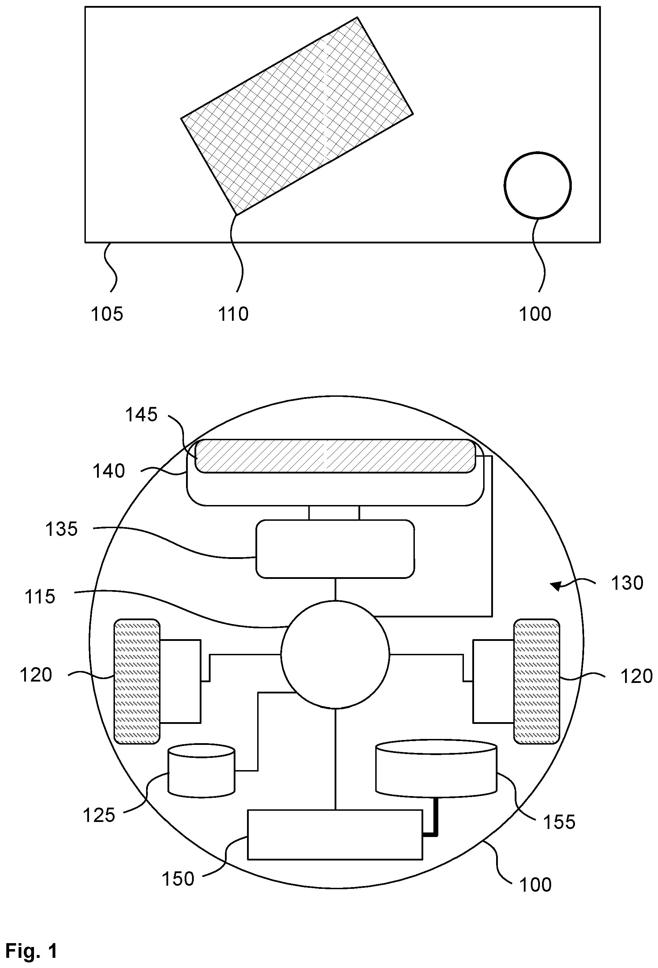

Figur 1 zeigt eine Bearbeitungsmaschine 100 auf einer Bodenfläche 105 in einem Haushalt. Die Bearbeitungsmaschine 100 ist dazu eingerichtet, über die Bodenfläche 105 zu fahren und diese zu bearbeiten, insbesondere trocken oder feucht zu reinigen. Auf der Bodenfläche 105 kann ein Belag 110 liegen, der einen Teppich, einen Läufer oder ein ähnliches Objekt umfasst, das einen Teil der Bodenfläche 105 abdeckt. Der Belag 110 ist nicht nur temporär auf der Bodenfläche 105 angeordnet und kann einen Teil einer Einrichtung des Haushalts bilden. Eine Beschaffenheit des Belags 110 unterscheidet sich von dem der Bodenfläche 105.

Die in einem unteren Abschnitt von Figur 1 genauer dargestellte Bearbeitungsmaschine 100 umfasst eine Verarbeitungseinrichtung 115, ein Fahrwerk 120, hier beispielhaft in Form zweier Räder mit Elektromotoren, eine Speichervorrichtung 125 und eine Bearbeitungsvorrichtung 130. Die Bearbeitungsvorrichtung 130 umfasst ein Saugwerk 135 und einen Saugmund 140. Das Saugwerk 135 ist dazu eingerichtet, einen Luftstrom durch den Saugmund 140 zu erzeugen, um Schmutz von der Bodenfläche 105 abzusaugen. Der Saugmund hat eine vorbestimmte Breite und erstreckt sich quer zu einer üblichen Fahrtrichtung der Bearbeitungsmaschine 100. Im Bereich des Saugmunds 140 ist eine elektrisch antreibbare Borstenwalze 145 vorgesehen, um die Bodenfläche 105 zu bearbeiten. Weiter bevorzugt ist eine steuerbare Wischeinrichtung 150 vorgesehen, die Flüssigkeit aus einem Flüssigkeitstank 155 nutzen kann, um eine befahrene Bodenfläche 105 zu reinigen. Die Wischeinrichtung150 kann ein Kissen oder Vlies umfassen, das bevorzugt auf die Bodenfläche 105 abgesenkt oder von ihr abgehoben werden kann. Eine Zufuhr von Flüssigkeit kann steuerbar sein. In einer weiteren Ausführungsform ist eine Vorrichtung zum Absaugen von Flüssigkeit von der Bodenfläche 105 vorgesehen, die ebenfalls steuerbar sein kann. Breiten des Saugmunds 140, der Borstenwalze 145 und der Wischeinrichtung 150 können einander paarweise entsprechen. Die Verarbeitungseinrichtung 115 ist dazu eingerichtet, genannte Komponenten der Bearbeitungsmaschine 100 zu steuern.

Um die Bodenfläche 105 optimal zu bearbeiten soll die Bearbeitungsmaschine 100 in Abhängigkeit des Bodenbelags 110 gesteuert werden. Dafür ist zunächst zu bestimmen, wo der Belag 110 auf der Bodenfläche 105 liegt bzw. wo Grenzen zwischen dem Belag 110 und der Bodenfläche 105 verlaufen. Eine Bestimmung dieser Grenzen wird hierin auch Kartografieren genannt. Die Bearbeitungsmaschine 100 kann dazu eingerichtet sein, Objekte wie Möbel, Personen oder Haustiere im Haushalt zu erkennen, um eine Kollision zu vermeiden oder eine Reinigung zu steuern. Dazu können einer oder mehrere dedizierte oder implizite Sensoren vorgesehen sein. Beispielsweise kann eine Kamera oder ein LiDAR-Sensor zur Abtastung eines Umfelds vorgesehen sein oder elektrische Ströme durch Elektromotoren des Fahrwerks 120 oder der Borstenwalze 145 können ausgewertet werden. Eine hierin beschriebene Kartografierung kann integriert oder separat von dieser Erkennung erfolgen. Erkenntnisse können jeweils in Karten oder Kartenebenen einer gemeinsamen Karte in der Speichervorrichtung 125 abgelegt werden.

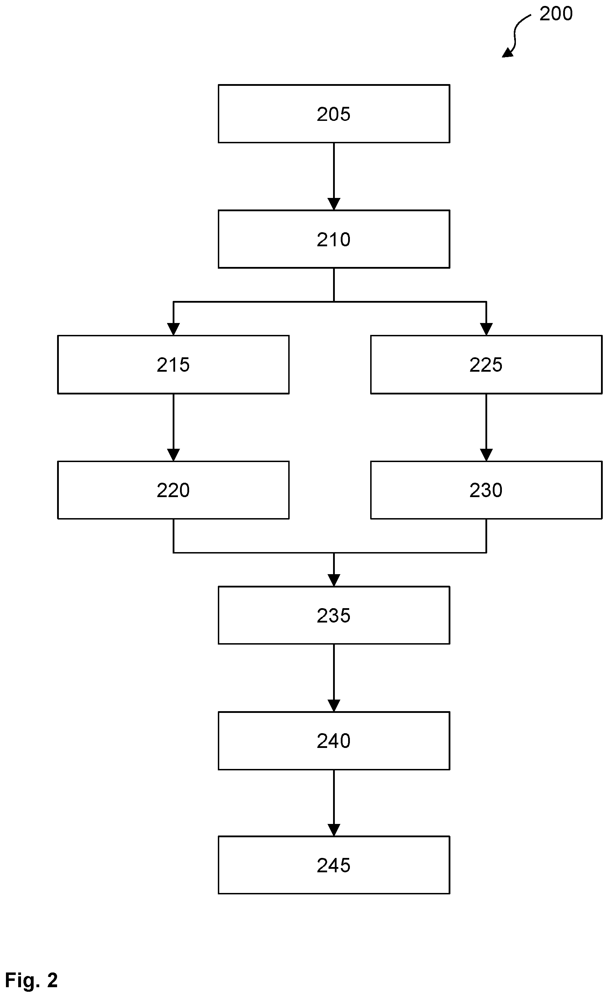

Figur 2 zeigt ein Ablaufdiagramm eines Verfahrens 200 zum Kartografieren einer Bodenfläche 105. In einem Schritt 205 kann die Bodenfläche mit der Bearbeitungsmaschine 100 abgefahren werden. Dabei kann bereits eine Bearbeitung der Bodenfläche 105 erfolgen oder es kann sich um eine Erkundungsfahrt handeln. Das Abfahren kann systematisch erfolgen, beispielsweise mäanderförmig, oder unregelmäßig bzw. durch eine andere Systematik bedingt oder auch zufällig.

In einem Schritt 210 kann eine Beschaffenheit der Bodenfläche 105 bestimmt werden. Dazu kann ein dedizierter Sensor ausgewertet werden, der die Beschaffenheit beispielsweise aufgrund eines Reflexionsgrads infraroten Lichts bestimmt. Es wird jedoch ein elektrischer Strom bestimmt, der durch einen Antrieb der Borstenwalze 145 fließt. Der Strom wird in Abhängigkeit der Länge eines Flors eines Untergrunds variieren.

In einem ersten Zweig des Verfahrens 200, der in Figur 2 links dargestellt ist, kann für Abschnitte der Bodenfläche 105 jeweils bestimmt werden, wie der Abschnitt beschaffen ist bzw. ob er eine vorbestimmte Beschaffenheit aufweist oder nicht. Durch diese Unterscheidung kann der betroffene Abschnitt entweder der Bodenfläche 105 oder einem darauf liegenden Belag 110 zugeordnet werden. Diese Information kann in eine Belegungskarte eingetragen werden, die ein matrixförmiges Raster umfasst, das die Bodenfläche 105 repräsentiert. Jedem Feld ist ein Abschnitt des befahrenen Untergrunds zugeordnet. Felder tragen binäre Werte, wobei ein erster Wert angibt, dass die vorbestimmte Beschaffenheit vorliegt und ein zweiter Wert, dass er das nicht tut. Felder der Belegungskarte können mit dem zweiten Wert initialisiert sein. Optional kann auch ein dritter Wert vorgesehen sein, mit dem die Felder initialisiert sind und der anzeigt, dass der korrespondierende Abschnitt noch nicht befahren wurde. Das Abtasten kann fortgeführt werden, bis ausreichend viele Abschnitte befahren und abgetastet wurden. Sollen die Daten der Belegungskarte ausgewertet werden, so können Felder, die noch den dritten Wert tragen, mit dem zweiten Wert beschrieben werden.

In einem Schritt 220 kann ein binärmorphologischer Filter auf die Belegungskarte angewandt werden. Die Belegungskarte kann als binärgrafische Repräsentation der Bodenfläche 105 verstanden werden. Vor der Anwendung des Filters umfasst die Belegungskarte - die Existenz des Bodenbelags 110 und eine nicht übermäßige Fehlbestimmungsrate vorausgesetzt - einen ersten Bereich, in dem Felder vermehrt den ersten Wert tragen, und wenigstens einen zweiten Bereich, in dem Felder vermehrt den zweiten Wert tragen. Der erste Bereich ist eine ungefähre Repräsentation des Belags 110 und der zweite Bereich der umliegenden Bodenfläche 105.

Der Filter kann insbesondere eine Schließung umsetzen, bei der kleine Bereiche, die zwischen Gruppen von Feldern mit dem ersten Wert liegen, mit dem ersten Wert belegt werden, ohne dabei ein Gebilde, das durch zusammenhängende Felder mit dem ersten Wert gebildet ist, in alle Richtungen anwachsen zu lassen. Der Filter umfasst eine zweidimensionale Maske, die sich über mehrere Felder erstrecken kann, deren Form und Größe Eigenschaften der Schließung steuert.

Die Schließung kann eine Dilatation umfassen, bei der Umrisse eines Gebildes in alle Richtungen um einen vorbestimmten Betrag erweitert werden, gefolgt von einer Erosion, die eine umgekehrte Operation darstellt, bei der die Umrisse in allen Richtungen um einen vorbestimmten Betrag abgetragen werden. In Kombination können nicht nur kleine Bereiche, die den zweiten Wert tragen, überbrückt bzw. dadurch gebildete Löcher geschlossen, sondern auch nahe am Rand liegende, vereinzelte Felder mit dem ersten Wert entfernt werden. Durch Wahl von Größenverhältnissen von bei der Dilatation und der bei der Erosion verwendeten Masken kann dieser Effekt gesteuert werden. Als Resultat der Verarbeitung umfasst die Belegungskarte nun eine verbesserte Repräsentation der Bodenfläche 105, auf welcher ein Objekt, das den Belag 110 repräsentiert, durch Felder mit dem ersten Wert gebildet ist.

In einem zweiten Zweig des Verfahrens 200, der in Figur 2 rechts dargestellt ist, kann eine andere Auswertung der Abtastungen erfolgen. Diese setzt voraus, dass die Bodenfläche 105 in einer vorbestimmten Weise befahren wurde. Dabei fährt die Bearbeitungsmaschine 100 auf vorbestimmten geraden Spuren, die zueinander parallel und bevorzugt gleichmäßig beabstandet sind. Weiter bevorzugt fährt die Bearbeitungsmaschine 100 auf benachbarten Spuren in entgegengesetzten Richtungen. Ändert sich während der Fahrt ein durch den Antriebsmotor der Borstenwalze 145 fließender elektrischer Strom, so kann eine Änderung der Beschaffenheit des Untergrunds im befahrenen Abschnitt der Bodenfläche 105 bestimmt werden. Der Übergang kann abgespeichert werden, beispielsweise durch Beschreiben eines dem Abschnitt zugeordneten Felds in einer weiteren Belegungskarte mit einem entsprechenden Wert.

Liegen ausreichend Informationen über Abschnitte der Bodenfläche 105 vor, in denen sich die Beschaffenheit des Untergrunds ändert, so kann ein Umriss des Belags 110 ermittelt werden - auch hier die Existenz des Belags 110 und eine nicht übermäßige Fehlbestimmungsrate vorausgesetzt. Durch Verbinden von Abschnitten, an denen sich die Beschaffenheit ändert, kann ein Umriss des Belags 110 bestimmt werden. Variationen der Vorgehensweise, mit der auf der Basis der Abschnitte Punkte gebildet werden, die den Umriss weiter verbessert repräsentieren, sind hierin noch genauer beschrieben.

In einem Schritt 235 kann eine Bestimmung des linken oder des rechten Zweigs übernommen werden, um Grenzen des Belags 110 auf der Bodenfläche 105 anzugeben. Bevorzugt werden jedoch beide Ansätze miteinander kombiniert. Dazu kann insbesondere eine Schnittmenge von Objekten gebildet werden, die jeweils den Belag 110 auf der Bodenfläche 105 repräsentieren. Es ist bevorzugt, dass das Objekt auf der Belegungskarte nach der Verarbeitung des linken Zweigs vorbereitet wird, indem es mittels einer vorbestimmten Maske binärmorphologisch dilatiert wird, bevor die Schnittmenge gebildet wird. Grenzen des durch das Schneiden gebildeten Objekts können als Grenzen des Belags 110 aufgefasst werden.

Umfasst die bestimmte Beschaffenheit des Belags 110 beispielsweise einen langflorigen Untergrund, so kann festgelegt werden, dass ein durch den Belag 110 bedeckter Bereich der Bodenfläche 105 befahren und gesaugt, nicht aber gebürstet oder feucht gereinigt werden soll, falls die Bearbeitungsmaschine 100 dies unterstützt. Betrifft die Beschaffenheit einen noch langflorigeren Bereich, so kann das Befahren erlaubt, jede Art von Bearbeiten aber verboten sein. Betrifft die Beschaffenheit einen extrem langflorigen Bereich, so kann auch das Befahren verboten sein.

In einem Schritt 240 kann das bestimmte Objekt visualisiert werden. Insbesondere kann das Objekt auf einer grafischen Darstellung, die einem Benutzer der Bearbeitungsmaschine 100 zur Kontrolle vorgelegt werden kann, angezeigt oder hervorgehoben werden. Die Darstellung kann repräsentieren, welche Kenntnisse die Bearbeitungsmaschine 100 über die Bodenfläche 105 im Haushalt hat und kann beispielsweise eine Gefahrenstelle, ein Hindernis, den Ort einer Basisstation oder einen nicht zu befahrenden Bereich ausdrücken. Eine Anweisung, wie die Bearbeitungsmaschine 100 in Abhängigkeit des Bereichs gesteuert werden soll, kann angegeben werden. Der Benutzer kann die Informationen bestätigen oder verändern. Insbesondere kann er einem bestimmten Bereich der Bodenfläche 105 eine Anweisung für die Bearbeitungsmaschine 100 zuordnen, die insbesondere steuern kann, wie weit sich die Maschine 100 dem Bereich nähern, ob sie ihn überfahren und ob oder wie sie ihn bearbeiten darf.

In einem Schritt 245 kann die Bearbeitungsmaschine 100 über die Bodenfläche 105 gesteuert werden. In Abhängigkeit vorliegender Informationen, insbesondere bezüglich Grenzen des Bodenbelags 110 und zugeordneter Anweisungen, kann eine Bearbeitung des befahrenen Untergrunds gesteuert werden.

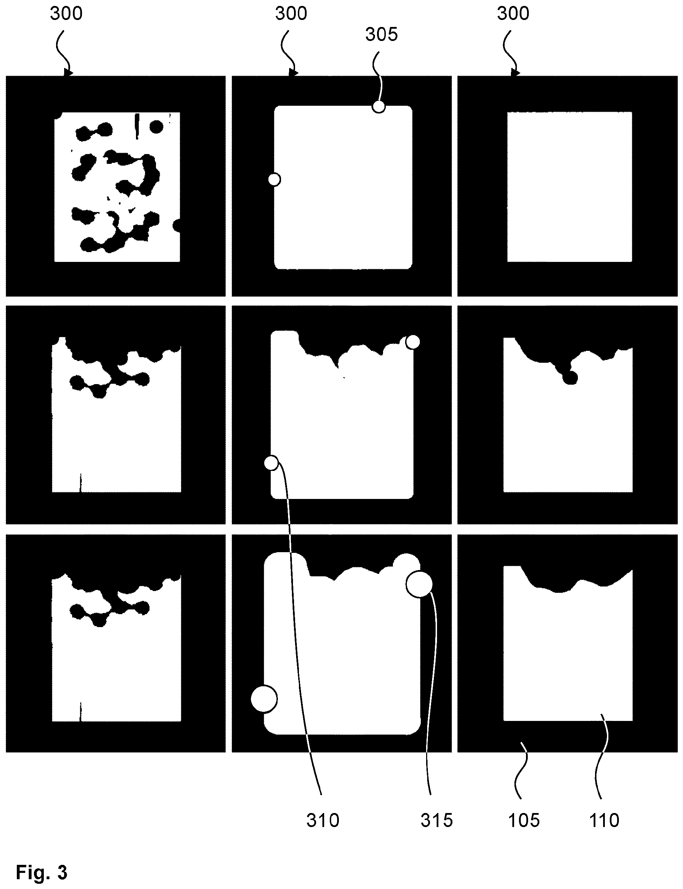

Figur 3 zeigt unverarbeitete und verarbeitete Belegungskarten 300 einer Bodenfläche 105. In drei Spalten sind von links nach rechts eine unverarbeitete Belegungskarte 300, die Belegungskarte 300 nach einer binärmorphologischen Dilatation und die Belegungskarte 300 nach einer anschließenden Erosion dargestellt. Ein Raster der Belegungskarte 300 ist in der Darstellung nicht erkennbar und kann als entsprechend fein angenommen werden.

In der ersten Zeile wird von einer relativ vollständigen aber lückenhaften Repräsentation des Belags 110 ausgegangen. Die Lücken können durch Fehlbestimmungen oder Hindernisse, beispielsweise ein Tisch- oder Stuhlbein, bedingt sein. Zur Dilatation und Erosion wird eine vorbestimmte erste Maske 305 verwendet, die rund und relativ klein ist.

In der zweiten Zeile wird von einer unvollständigen und lückenhaften Repräsentation des Belags 110 ausgegangen. Beispielsweise kann in einem oberen Bereich des Objekts ein größeres Hindernis wie ein Sessel stehen. Eine verwendete zweite Maske 310 ist ebenfalls kreisrund und etwas größer als die erste Maske 305.

In der dritten Zeile wird von derselben Repräsentation des Belags 110 wie in der zweiten Zeile ausgegangen, jedoch wird eine noch größere und ebenfalls kreisrunde dritte Maske 315 verwendet.

Es ist zu sehen, wie durch die dargestellten Schließungen jeweils eine Form des Belags 110 verbessert angenähert werden kann. Eine größere Maske hat dabei eine potentiell stärkere Kraft, nicht erreichbare oder versperrte Bereiche des Belags 110 nachzubilden.

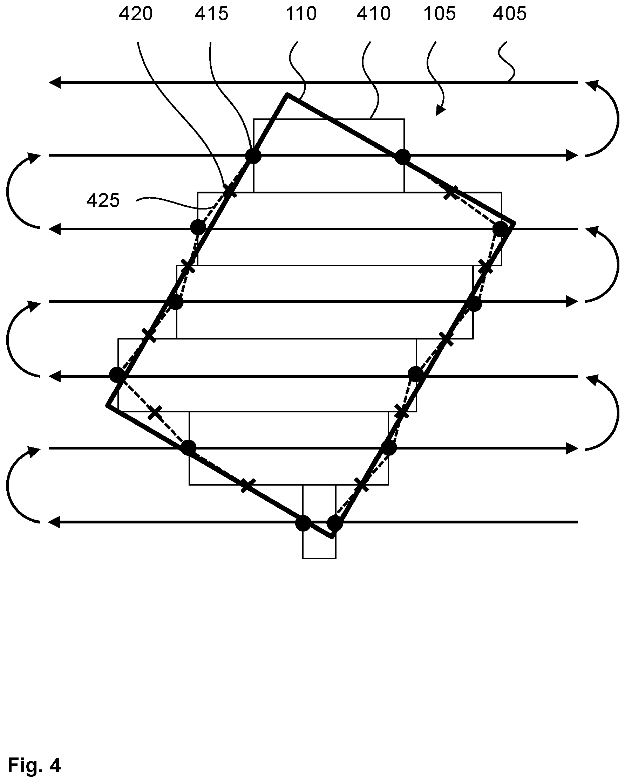

Figur 4 zeigt eine schematische Darstellung einer Abtastung einer Bodenfläche 105. Die Bearbeitungsmaschine 100 fährt auf einem mäanderförmigen Pfad 405 auf Bahnen 410, die jeweils bevorzugt etwa so breit sind wie die Bearbeitungsmaschine 100 oder weiter bevorzugt etwa so breit wie der Saugmund 140, die Borstenwalze 145 oder die Wischeinrichtung 150. Fahrtrichtungen der Bearbeitungsmaschine 100 auf benachbarten Bahnen 410 sind bevorzugt einander entgegengesetzt.

Fährt die Bearbeitungsmaschine 100 auf der Bodenfläche 105 über eine Begrenzung des Belags 110, so kann dies erfasst werden, beispielsweise weil sich ein durch den Antriebsmotor der Borstenwalze 145 fließender elektrischer Strom in einer vorbestimmten Weise ändert. Beim Auffahren auf den langflorigen Belag 110 kann sich der Strom erhöhen, beim Abfahren verringern. So können Abschnitte oder Punkte 415 bestimmt werden, an denen eine Grenze des Belags 110 vermutet wird. Der Punkt 415 wird bevorzugt in der Mitte einer befahrenen Bahn 410 bestimmt, um zu berücksichtigen, dass der Saugmund 140 schräg über die Grenze fahren könnte. Die Punkte 415 können zu einem Umriss 425 des Belags 110 verbunden werden.

Bevorzugt werden die Punkte 415 vor der Bildung des Umrisses 425 jedoch noch weiterverarbeitet, indem zwischen benachbarten Punkten 415, an denen sich die Beschaffenheit aufgrund der unterschiedlichen Fahrtrichtungen entgegengesetzt ändert, jeweils Mittelpunkte 420 gebildet werden. Dadurch kann berücksichtigt werden, dass die Erkennung eines Übergangs häufig um eine vorbestimmte Zeit versetzt zum eigentlichen Überfahren der Grenze erfolgt. Endpunkte einer Folge von Punkten 415, die zueinander benachbart sind, wobei sich die Folge entlang einer vorbestimmten Kurve erstreckt, können zusätzlich zu den Mittelpunkten 420 berücksichtigt werden. Eine Kurve kann insbesondere eine Gerade oder eine Kurve mit einer vorbestimmten Krümmung umfassen. In einer anderen Ausführungsform können Punkte 415, die in maximal voneinander entfernten Bahnen 410 liegen, berücksichtigt werden. Weiter können Punkte, die entlang einer Bahn 410 oder bezüglich aller Bahnen410 maximal voneinander entfernt sind, berücksichtigt werden. Verbleibende Punkte 415 müssen hingegen nicht weiter beachtet werden, wenn die ausgewählten Punkte 415, 420 nach Art eines Polygons zu einem Umriss 425 des Belags 110 zusammengefügt werden.

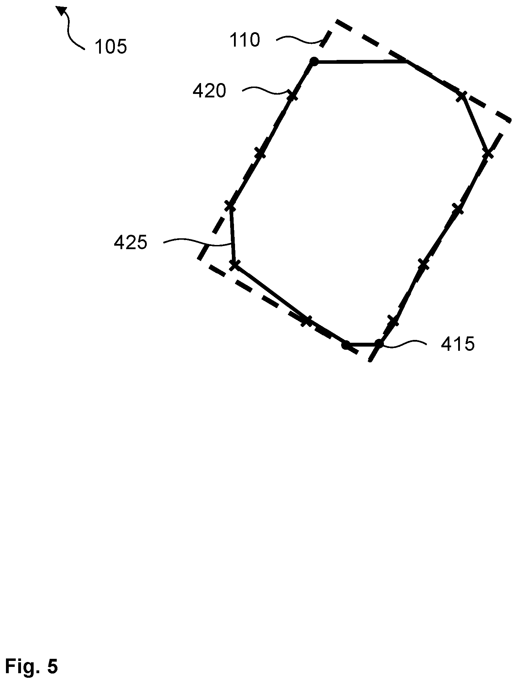

Figur 5 zeigt einen bestimmten Umriss 425 eines Bodenbelags 110 nach Figur 4 auf der Basis von Mittelpunkten 420 und ausgewählten Punkten 415. Der solchermaßen bestimmte Umriss 425 kann verwendet werden, um ein Objekt zu beschneiden, das durch eine hierin beschriebene Anwendung eines binärmorphologischen Filters auf eine Belegungskarte 300 bestimmter Beschaffenheiten der Bodenfläche 105 entstanden ist.

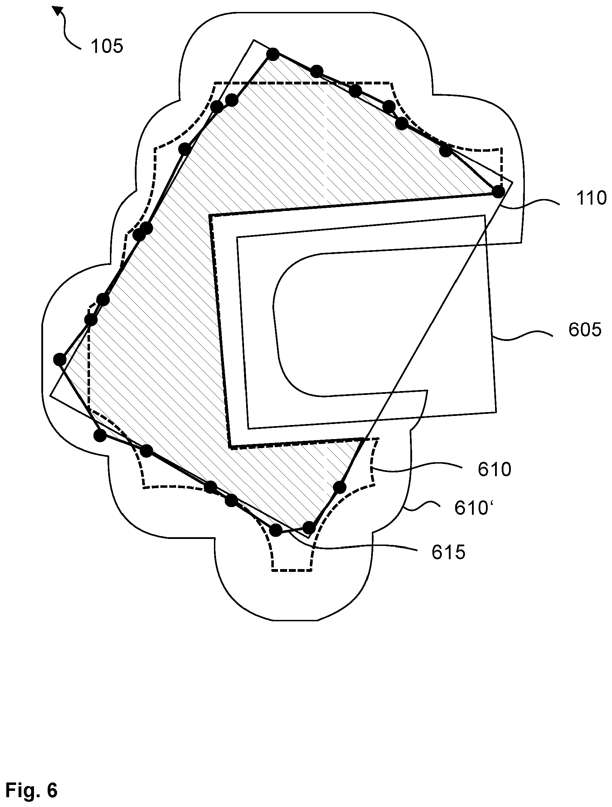

Figur 6 zeigt einen solchen Schnitt bzw. das Bilden einer Schnittmenge. Beispielhaft wird davon ausgegangen, dass auf einem Abschnitt des Belags 110 ein Hindernis 605 steht, das eine Abtastung der Beschaffenheit verhindert. Erste Grenzen 610 sind auf der Basis des binärmorphologischen Filterns bestimmt. Vorteilhaft ist die Lage des Hindernisses 605 genau bestimmt, allerdings sind Kanten des Belags 110 nicht sehr genau bestimmt.

Zweite Grenzen 615 entsprechen einem Umriss 425, der auf der Basis von Punkten 415 oder Mittelpunkten 420 gebildet ist. Die zweiten Grenzen verlaufen allgemein besser entlang Kanten des Belags 110. Allerdings geht aus den Bestimmungen nicht hervor, wo ein Hindernis 605 auf dem Belag 110 liegt. Da in diesem Bereich kein Übergang zwischen der Bodenfläche 105 und dem Belag bestimmt werden konnte, sind zahlreiche verschieden große und verschieden geformte Hindernisse 605 vorstellbar, die sich über diesen Bereich erstrecken könnten. Dementsprechend kann auf der Basis der zweiten Grenzen 615 nicht zuverlässig bestimmt werden, bis wohin sich ein befahrbarer Abschnitt des Belags 110 erstreckt.

Durch Bilden einer Schnittmenge eines ersten Objekts, das durch die ersten Grenzen 610 bestimmt ist, mit einem zweiten Objekt, das durch die zweiten Grenzen 615 gebildet ist, kann die Fähigkeit des ersten Ansatzes, offene Flächen zu schließen, mit der Fähigkeit des zweiten Ansatzes, einen Umriss aufgrund von Übergängen gut zu bestimmen, miteinander kombiniert werden.

Es ist noch weiter bevorzugt, dass die ersten Grenzen 610 vor dem Bilden der Schnittmenge mittels eines vorbestimmten Filters dilatiert werden, sodass sich erste Grenzen 610' ergeben. Eine gebildete Schnittmenge ist in Figur 6 schraffiert dargestellt. Grenzen dieser Schnittmenge können als Grenzen des Belags 110 bzw. als Grenzen eines befahrbaren Abschnitts des Belags 110 bestimmt werden.

### Bezugszeichen

- 100: Bearbeitungsmaschine
- 105: Bodenfläche
- 110: Belag
- 115: Verarbeitungseinrichtung
- 120: Fahrwerk
- 125: Speichervorrichtung
- 130: Bearbeitungsvorrichtung
- 135: Saugwerk
- 140: Saugmund
- 145: Borstenwalze
- 150: Wischeinrichtung
- 155: Flüssigkeitstank

- 200: Verfahren
- 205: Bodenfläche abfahren
- 210: Beschaffenheit bestimmen
- 215: Abschnitte vorbestimmter Beschaffenheit vermerken
- 220: Binärmorphologischen Filter anwenden
- 225: Abschnitte, an denen sich die Beschaffenheit ändert, vermerken
- 230: Umriss bestimmen
- 235: Objektmengen schneiden
- 240: Objekt visualisieren
- 245: Bodenreiniger steuern

- 300: Belegungskarte
- 305: erste Maske
- 310: zweite Maske
- 315: dritte Maske

- 405: Pfad
- 410: Bahn
- 415: Punkt
- 420: Mittelpunkt
- 425: Umriss

- 605: Hindernis
- 610: erste Grenzen
- 610': dilatierte erste Grenzen
- 615: zweite Grenzen

## Patentansprüche

1. Verfahren (200) zum Kartografieren einer Bodenfläche (105) in einem Haushalt, wobei das Verfahren (200) folgende Schritte umfasst:
- Abtasten (210) der Bodenfläche (105) und Bestimmen von Abschnitten der Bodenfläche (105), an denen eine vorbestimmte erste Beschaffenheit der Bodenfläche (105) vorliegt, wobei die Bodenfläche (105) mittels einer Bearbeitungsmaschine (100) mit einer antreibbaren Borstenwalze (145) zur Reinigung der Bodenfläche (105) abgetastet wird; wobei die Beschaffenheit der Bodenfläche (105) auf der Basis einer Stromaufnahme eines Antriebs der Borstenwalze (145) bestimmt wird, indem ein elektrischer Strom bestimmt wird, der durch den Antrieb der Borstenwalze (145) fließt und der in Abhängigkeit der Länge eines Flors eines Untergrunds variiert;
- Eintragen (215) der bestimmten Abschnitte in eine Belegungskarte (300) der Bodenfläche (105);
- Anwenden (220) eines binärmorphologischen Filters auf die Belegungskarte (300), wobei die Borstenwalze (145) eine vorbestimmten Breite aufweist; und
- Bestimmen (235) von ersten Grenzen eines auf der Bodenfläche (105) liegenden Belags (110) auf der Basis der Belegungskarte (300);
- Wählen einer Größe einer Filtermaske (305-315) des binärmorphologischen Filters in Abhängigkeit der Breite der Borstenwalze (145), sodass der Filter Umstände der Abtastung reflektiert.

2. Verfahren (200) nach Anspruch 1, wobei die Filteroperation eine Dilatation, gefolgt von einer Erosion umfasst.

3. Verfahren (200) nach Anspruch 1 oder 2, wobei eine kreisförmige Filtermaske (305-315) verwendet wird, deren Radius in einem Bereich von einer halben und zwei Breiten der Borstenwalze (145) liegt.

4. Verfahren (200) nach Anspruch 3, wobei der Radius der Filtermaske (305-315) der Breite der Borstenwalze (145) entspricht.

5. Verfahren (200) nach einem der vorangehenden Ansprüche, wobei auf regelmäßig versetzten, antiparallelen Bahnen (410) über die Bodenfläche (105) jeweils Abschnitte bestimmt werden, an denen sich die Beschaffenheit der Bodenfläche (105) ändert; wobei zweite Grenzen des Belags (110) auf der Basis einer Vielzahl solcher Abschnitte bestimmt werden; und wobei eine Schnittmenge von Objekten bestimmt wird, die durch die ersten und die zweiten Grenzen bestimmt sind.

6. Verfahren (200) nach Anspruch 5, wobei ein Mittelpunkt (420) zwischen Abschnitten auf zwei antiparallelen Bahnen (410), an denen sich die Beschaffenheit gegensinnig ändert, bestimmt wird; und wobei die zweiten Grenzen des Belags (110) auf der Basis einer Vielzahl solcher Mittelpunkte (420) bestimmt wird.

7. Verfahren (200) nach Anspruch 5 oder 6, wobei eine Dilatation der ersten Grenzen erfolgt, bevor die Schnittmenge gebildet wird.

8. Verfahren (200) nach einem der vorangehenden Ansprüche, wobei eine Bearbeitungsmaschine (100) zur Reinigung der Bodenfläche (105) in Abhängigkeit bestimmter Grenzen des Belags (110) gesteuert wird.

9. Verfahren (200) nach einem der vorangehenden Ansprüche, wobei eine grafische Repräsentation der Bodenfläche (105) bereitgestellt (240) wird, die einen Hinweis auf bestimmte Grenzen des Belags (110) umfasst.

10. Bearbeitungsmaschine (100) für eine Bodenfläche (105), wobei die Bearbeitungsmaschine (100) folgendes umfasst:
- ein Fahrwerk (120) zum Fahren der Bearbeitungsmaschine (100) über die Bodenfläche (105);
- eine Einrichtung (130) zur Bestimmung, ob ein befahrener Abschnitt der Bodenfläche (105) eine vorbestimmte Beschaffenheit aufweist, wobei die Bodenfläche (105) mittels einer Bearbeitungsmaschine (100) mit einer antreibbaren Borstenwalze (145) zur Reinigung der Bodenfläche (105) abgetastet wird; wobei die Beschaffenheit der Bodenfläche (105) auf der Basis einer Stromaufnahme eines Antriebs der Borstenwalze (145) bestimmt wird;
- eine Speichervorrichtung (125) für eine Belegungskarte (300) der Bodenfläche (105);
- eine Verarbeitungseinrichtung (115), die dazu eingerichtet ist, bestimmte Abschnitte, an denen die vorbestimmte Beschaffenheit vorliegt, in die Belegungskarte (300) einzutragen; einen binärmorphologischen Filter auf die Belegungskarte (300) anzuwenden, wobei die Borstenwalze (145) eine vorbestimmten Breite aufweist; und erste Grenzen eines auf der Bodenfläche (105) liegenden Belags (110) auf der Basis der Belegungskarte (300) zu bestimmen;
- Wählen einer Größe einer Filtermaske (305-315) des binärmorphologischen Filters in Abhängigkeit der Breite der Borstenwalze (145), sodass der Filter Umstände der Abtastung reflektiert.

## Claims

1. Method (200) for mapping a floor area (105) in a household, wherein the method (200) comprises the following steps:
- scanning (210) the floor area (105) and determining sections of the floor area (105), on which a predetermined first quality of the floor area (105) is present, wherein the floor area (105) is scanned by means of a treatment machine (100) with a drivable bristle roller (145) for cleaning the floor area (105); wherein the quality of the floor area (105) is determined on the basis of a current consumption of a drive of the bristle roller (145), by an electrical current being determined, which flows through the drive of the bristle roller (145) and varies as a function of the length of a pile of a subsurface;
- entering (215) the determined sections into an occupancy map (300) of the floor area (105);
- applying (220) a binary morphological filter to the occupancy map (300), wherein the bristle roller (145) has a predetermined width; and
- determining (235) first limits of a covering (110) lying on the floor area (105), on the basis of the occupancy map (300);
- choosing a size of a filter mask (305-315) of the binary morphological filter as a function of the width of the bristle roller (145), so that the filter reflects circumstances of the scanning.

2. Method (200) according to claim 1, wherein the filter operation comprises a dilation, followed by an erosion.

3. Method (200) according to claim 1 or 2, wherein a circular filter mask (305-315) is used, the radius of which lies in a range from half the width to twice the width of the bristle roller (145).

4. Method (200) according to claim 3, wherein the radius of the filter mask (305-315) corresponds to the width of the bristle roller (145).

5. Method (200) according to one of the preceding claims, wherein sections are determined on regularly offset, antiparallel paths (410) over the floor area (105) in each case, on which sections the quality of the floor area (105) changes; wherein second limits of the covering (110) are determined on the basis of a large number of such sections; and wherein an overlap of objects is determined, which are determined by the first and the second limits.

6. Method (200) according to claim 5, wherein a centre point (420) is determined between sections on two antiparallel paths (410), on which the quality changes in an opposing manner; and wherein the second limits of the covering (110) are determined on the basis of a large number of such centre points (420).

7. Method (200) according to claim 5 or 6, wherein a dilation of the first limits takes place before the overlap is formed.

8. Method (200) according to one of the preceding claims, wherein a treatment machine (100) for cleaning the floor area (105) is controlled as a function of determined limits of the covering (110).

9. Method (200) according to one of the preceding claims, wherein a graphic representation of the floor area (105) is provided (240), which comprises a note regarding determined limits of the covering (110).

10. Treatment machine (100) for a floor area (105), wherein the treatment machine (100) comprises the following:
- a chassis (120) for driving the treatment machine (100) over the floor area (105);
- a facility (130) for determining whether a travelled section of the floor area (105) has a predetermined quality, wherein the floor area (105) is scanned by means of a treatment machine (100) with a drivable bristle roller (145) for cleaning the floor area (105); wherein the quality of the floor area (105) is determined on the basis of a current consumption of a drive of the bristle roller (145);
- a storage facility (125) for an occupancy map (300) of the floor area (105);
- a processing facility (115), which is configured to enter particular sections, on which the predetermined quality is present, into the occupancy map (300); to apply a binary morphological filter to the occupancy map (300), wherein the bristle roller (145) has a predetermined width; and to determine first limits of a covering (110) lying on the floor area (105) on the basis of an occupancy map (300);
- choosing a size of a filter mask (305-315) of the binary morphological filter as a function of the width of the bristle roller (145), so that the filter reflects circumstances of the scanning.

## Revendications

1. Procédé (200) de cartographie d'une surface de sol (105) dans une habitation, le procédé (200) comprenant les étapes suivantes :
- exploration (210) de la surface de sol (105) et détermination de sections de la surface de sol (105) présentant une première texture prédéfinie de la surface de sol (105), dans lequel la surface de sol (105) étant explorée au moyen d'une machine de traitement (100) comprenant un rouleau à brosse entraînable (145) destiné à nettoyer la surface de sol (105), où la texture de la surface de sol (105) est déterminée sur la base d'une consommation de courant d'un dispositif d'entraînement du rouleau à brosse (145), en déterminant un courant électrique qui circule à travers le dispositif d'entraînement du rouleau à brosse (145), lequel varie en fonction de la longueur du poil d'un revêtement de sol,
- inscription (215) des sections déterminées dans une carte d'occupation (300) de la surface de sol (105),
- application (220) d'un filtre morphologique binaire sur la carte d'occupation (300), le rouleau à brosse (145) ayant une largeur prédéfinie, et
- détermination (235) de premières limites d'un revêtement (110) situé sur la surface de sol (105) sur la base de la carte d'occupation (300),
- sélection d'une taille d'un masque (305-315) du filtre morphologique binaire en fonction de la largeur du rouleau à brosse (145), de sorte que le filtre reflète les conditions d'exploration.

2. Procédé (200) selon la revendication 1, dans lequel l'opération de filtrage comprend une dilatation, suivie d'une érosion.

3. Procédé (200) selon la revendication 1 ou 2, dans lequel un masque de filtre circulaire (305-315) est utilisé, dont le rayon est compris entre la moitié et deux fois la largeur du rouleau à brosse (145).

4. Procédé (200) selon la revendication 3, dans lequel le rayon du masque de filtre (305-315) correspond à la largeur du rouleau à brosse (145).

5. Procédé (200) selon l'une des revendications précédentes, dans lequel, sur des trajectoires antiparallèles (410) régulièrement décalées sur la surface de sol (105), des sections sont respectivement déterminées où la texture de la surface de sol (105) varie, dans lequel des deuxièmes limites du revêtement (110) sont déterminées sur la base d'une pluralité de ces sections, et dans lequel une intersection d'objets est déterminée, qui sont définis par les premières et deuxièmes limites.

6. Procédé (200) selon la revendication 5, dans lequel un point central (420) est déterminé entre des sections situées sur deux trajectoires antiparallèles (410), le long desquelles la texture du sol varie de manière opposée, et dans lequel les deuxièmes limites du revêtement (110) sont déterminées sur la base d'une pluralité de tels points centraux (420).

7. Procédé (200) selon la revendication 5 ou 6, dans lequel une dilatation des premières limites est effectuée avant la formation de l'intersection.

8. Procédé (200) selon l'une des revendications précédentes, dans lequel une machine de traitement (100) destinée à nettoyer la surface de sol (105) est commandée en fonction des limites déterminées du revêtement (110).

9. Procédé (200) selon l'une des revendications précédentes, dans lequel une représentation graphique de la surface de sol (105) est fournie (240), laquelle comprend une indication des limites déterminées du revêtement (110).

10. Machine de traitement (100) pour une surface de sol (105), la machine de traitement (100) comprenant les suivants :
- un système de déplacement (120) permettant de déplacer la machine de traitement (100) sur la surface de sol (105),
- un dispositif (130) pour déterminer si une section parcourue de la surface de sol (105) présente une texture prédéfinie, la surface de sol (105) étant explorée au moyen d'une machine de traitement (100) comprenant un rouleau à brosse entraînable (145) destiné à nettoyer la surface de sol (105), au moyen de quoi la texture de la surface de sol (105) est déterminée sur la base d'une consommation de courant d'un dispositif d'entraînement du rouleau à brosse (145),
- un dispositif de mémoire (125) pour une carte d'occupation (300) de la surface de sol (105),
- un dispositif de traitement (115), qui est configuré pour inscrire, dans la carte d'occupation (300), certaines sections dans lesquelles la texture prédéfinie est présente, pour appliquer un filtre morphologique binaire sur la carte d'occupation (300), le rouleau à brosse (145) ayant une largeur prédéfinie, et pour déterminer des premières limites d'un revêtement (110) situé sur la surface de sol (105) sur la base de la carte d'occupation (300), et
- la sélection d'une taille d'un masque (305-315) du filtre morphologique binaire en fonction de la largeur du rouleau à brosse (145) de sorte que le filtre reflète les conditions de l'exploration.
